# EUROPÄISCHE PATENTSCHRIFT

(11) **EP 0 785 171 B1**
(45) Veröffentlichungstag und Bekanntmachung des Hinweises auf die Patenterteilung: **21.03.2001**
(21) Anmeldenummer: 96810038.8
(22) Anmeldetag: 17.01.1996
(51) Int. Cl.: C02F 3/10, C02F 3/12

(54) **Trägermaterial für Biomasse bei Verfahren zum Reinigen von Abwasser**
Biomass carrier for waste water purification processes
Support à biomasse pour les procédés de traitement des eaux usées

(43) Veröffentlichungstag der Anmeldung: 23.07.1997
(73) Patentinhaber: CT Umwelttechnik AG, CH-8404 Winterthur (CH)
(72) Erfinder: Tippmann, Kurt, D-35428 Langgöns (DE)
(74) Vertreter: VA TECH Patente GmbH

(56) Entgegenhaltungen:
- DD-A- 277 066
- DE-A- 2 217 038
- US-A- 4 009 099
- US-A- 5 439 590

## Beschreibung

Die Erfindung betrifft ein Trägermaterial für Biomasse bei Verfahren zum Reinigen von Abwasser sowie Verwendungen dieses Trägermaterials.

Die biologische Abwasserreinigung umfasst verschiedene Verfahren mit immobilisierter Biomasse. Bei diesen Verfahren, die in "Biofilm"-Reaktoren durchgeführt werden, wachsen sessile, durch Inhaltsstoffe des Abwassers genährte Bakterien auf Oberflächen von Trägerstrukturen und bilden so einen Biofilm. Beispiele für Trägerstrukturen sind Tropfkörper, rotierende Scheibentauchkörper, geordnete strukturierte Packungen und Schüttungen oder Suspensionen von körnigem Trägermaterial, wie beispielsweise Aktivkohle, Sand, Bims, Blähschiefer oder Blähton. Körniges Trägermaterial wird bei Verfahren mit ruhendem und bewegtem Trägermaterial verwendet, beispielsweise in Festbett-, Wirbelbett-, Fliessbettreaktoren sowie durchmischten Reaktoren.

Reaktoren mit "Trägerbiologie" sind besonders vorteilhaft bei langsam wachsenden Bakterienpopulationen, wie sie bei der Nitrifikation (Stickstoffoxidation unter aeroben Bedingungen) vorliegen. Wichtig für eine wirkungsvolle Trägerbiologie ist ein Trägermaterial mit einer grossen spezifischen Oberfläche, wobei die Oberfläche des Trägermaterials bakteriophil ist (die Ausbildung eines aktiven Biofilms ermöglichend) und Stoffübergänge, beispielsweise der Sauerstoffübergang, zwischen dem zu behandelnden Wasser und dem Biofilm gut ist. Beim Einsatz von Festbetten aus körnigem Trägermaterial ist ferner ein geringer Druckabfall in der Schüttung vorteilhaft. Das Trägermaterial soll eine hohe Abriebfestigkeit aufweisen, da zur Entfernung von abgelagerten Schwebstoffen sowie gebildetem Überschussschlamm das Festbett regelmässig gespült werden muss. Soll das Festbett zusätzlich als Filtermedium verwendet werden, so ist ein hohes Rückhaltevermögen für Schwebestoffe erforderlich.

Sind die Teilchen des körnigen Trägermaterials porös (z.B. in der Art eines Schwämmchens), so kann der Stoffwechsel der Mikroorganismen zu einer Mineralisierung durch Ablagerungen in den Porenhohlräumen führen. Bei bewegtem Trägermaterial ergeben sich so folgende Nachteile:
- Absetzen von schwerer gewordenen Trägerteilchen, wobei störende Hindernisse für die Bewegung der Teilchen entstehen können.
- Ausscheiden von Trägerteilchen aus dem aktiven Reinigungsprozess.
- Verringerung der Besiedlungsfläche für die Mikroorganismen.

Der Bewuchs der Trägerteilchen mit einem Biofilm erfolgt in der Regel ohne Problem. Diesen Bewuchs vorausgesetzt, so sind es die geometrischen und physikalischen Eigenschaften der Teilchen, die einen wesentlichen Einfluss auf die benötigte Reaktorgrösse, den erforderlichen Energieaufwand und die mögliche Eliminationsleistung (C- und N-Elimination, d.h. Abbau organischer Inhaltsstoffe und Stickstoffverbindungen, insbesondere Ammonium) haben. Diese Eigenschaften spielen auch eine wichtige Rolle in Bezug auf das Problem, Überschussschlamm aus dem Verfahren abzuscheiden, beispielsweise mittels sedimentativer Abtrennung.

Es ist Aufgabe der Erfindung, ein aus suspendierbaren Körperchen gebildetes Trägermaterial zur Verfügung zu stellen, das sich besonders gut für Verfahren mit bewegtem Trägermaterial, insbesondere Wirbelbett- und Fliessbettverfahren eignet. Dabei stehen die Erfordernisse eines kostengünstigen Materials mit den für den Verwendungszweck günstigen biologischen Eigenschaften sowie einer störungsarmen Betriebsweise bei gleichzeitiger hoher Reinigungsleistung im Vordergrund. Diese Aufgabe wird durch das in Anspruch 1 definierte Trägermaterial gelöst.

Das Trägermaterial für Biomasse bei Verfahren zum Reinigen von Abwasser umfasst eine Vielzahl von Körperchen. Diese Trägerkörperchen sind mehrheitlich länglich ausgebildet, weisen rauhe Oberflächen auf und sind durch Zerkleinern aus einem Ausgangsstoff hergestellt, der weitgehend homogen sowie porenfrei ist und dessen Dichte im Bereich zwischen 1,05 und 1,5 g/cm³ liegt. Einer Mehrheit der Körperchen, die mindestens rund 80 Gewichtsprozent derer Gesamtmenge umfasst, sind folgende statistischen Angaben bezüglich Längen und Breiten der Körperchen zuordenbar: Längen mit Werten von rund 0,5 bis 20 mm und Breiten mit Werten von rund 0,2 bis 3 mm, sowie ein Mittelwert des Verhältnisses von Länge zu grösserer Breite grösser als 2.

Insbesondere bei Verwendung von gebrauchten Autoreifen (auch Förderbändern oder Tennisbällen) als Ausgangsstoff steht ein sehr kostengünstiges Trägermaterial zur Verfügung. Dank der Porenfreiheit des Ausgangsstoffs besteht auch nicht die Gefahr der Bildung von Ablagerungen in den Porenhohlräumen.

Die abhängigen Ansprüche 2 bis 5 beziehen sich auf vorteilhafte Ausführungsformen des erfindungsgemässen Trägermaterials. Die Ansprüche 6 bis 10 betreffen Verwendungen dieses Trägermaterials, bei welchen es besonders geeignet ist.

Nachfolgend wird die Erfindung anhand der Zeichnungen erläutert. Es zeigen:
- Fig. 1: ein Körperchen des erfindungsgemässen Trägermaterials,
- Fig. 2: ein mit Biomasse bewachsenes Körperchen,
- Fig. 3: Umrissdarstellungen von Körperchen,
- Fig. 4: eine Versuchsanordnung,
- Fig. 5: ein Detail zu Fig.4,
- Fig. 6: einen Reaktor des SBBR-Typs,
- Fig. 7: einen Schlaufenreaktor,
- Fig. 8: einen Wirbelbettreaktor,
- Fig. 9: einen durchmischten Reaktor und
- Fig. 10: einen Festbettreaktor

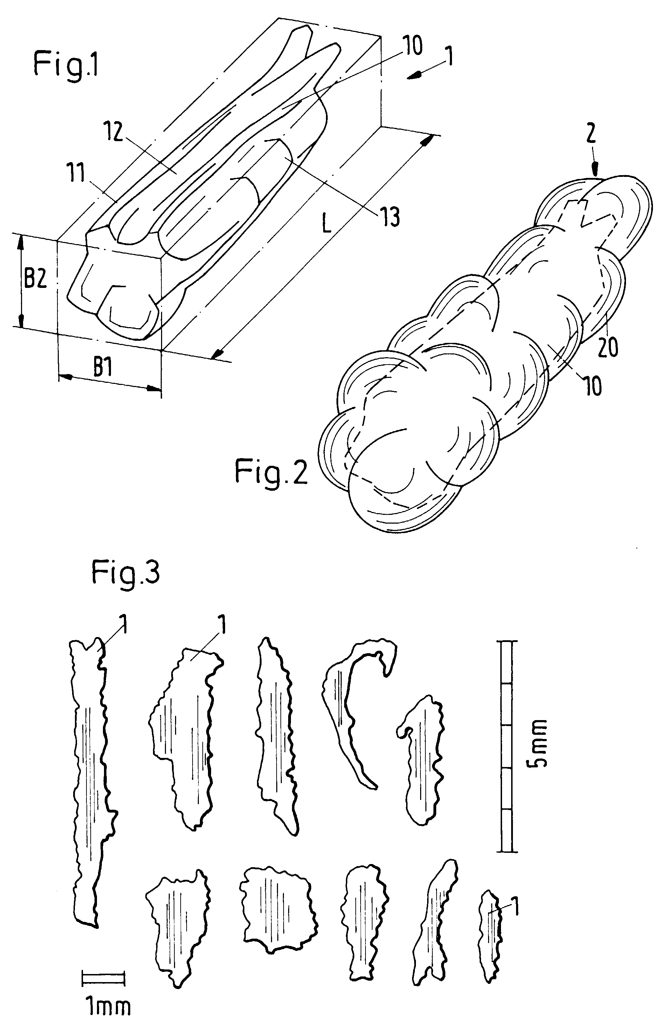

Fig.1 stellt ein Trägerkörperchen 1 dar, das eine Länge L, eine grosse Breite B1 und eine kleine Breite B2 aufweist. Die Oberfläche 10 ist rauh; Elemente der Oberflächenstruktur sind beispielsweise kammartige Erhebungen 11, rinnenförmige Vertiefungen 12 und zahnartige Vorsprünge 13. Auf dieser rauhen Oberfläche 10 können sich Bakterien ansiedeln und dabei einen Biofilm 20 - siehe Fig.2 - ausbilden. In Fig.3 ist eine Auswahl von Trägerkörperchen 1 zusammengestellt, wobei nur die an den Umrissen erkennbaren Oberflächenstrukturen gezeichnet sind. Diese Körperchen 1 sind Gummiteilchen, die durch Zerkleinern aus gebrauchten Autoreifen hergestellt worden sind. Ein grosser Teil der Körperchen 1 sind länglich ausgebildet. Einer Mehrheit der Körperchen 1, die mindestens rund 80 Gewichtsprozent derer Gesamtmenge umfasst, sind folgende statistischen Angaben bezüglich der Länge L und den Breiten B1 und B2 der Körperchen zuordenbar: Die Länge L weist Werte zwischen rund 1 und 10 mm auf und die Breiten B1, B2 Werte zwischen rund 0,2 und 3 mm; der Mittelwert des Verhältnisses von Länge L zu grösserer Breite B1 ist grösser als 2.

Durch Sieben oder andere klassierende Verfahren lässt sich ein vorgebbares Spektrum der Körperchengrössen herstellen. Je nach Verwendungszweck kann eine geeignete spezifische Oberfläche der Körperchen eingestellt werden. Die spezifische Oberfläche eines Körperchens 1 ( Körperchenvolumen ≈ ¼·π·B²·L , Oberfläche > π·B·L) beträgt f/B, wobei f ein Faktor schätzungsweise zwischen rund 4 und 10 ist und B ein aus den Breiten B1 und B2 gebildeter Mittelwert ist. Für eine Suspension der Körperchen 1 beträgt die spezifische Oberfläche grössenordnungsmässig 1/B, z.B. 2000 m²/m³, wenn B = 0,5 mm.

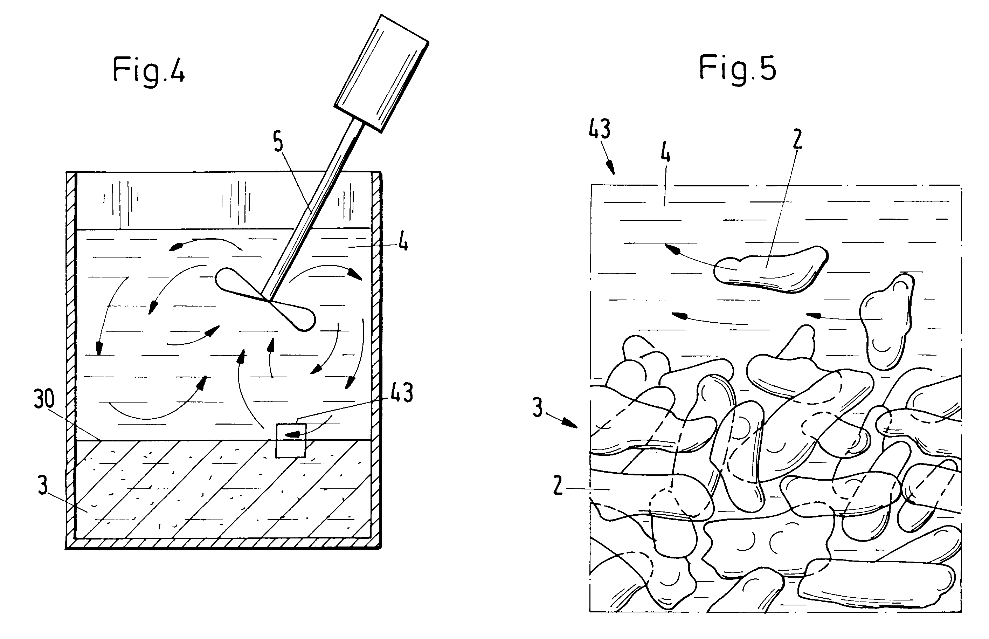

Die Fig.4 zeigt ein Gefäss mit einer Schüttung 3 von Körperchen 2, die sich in einer Flüssigkeit 4, insbesondere Wasser, am Gefässboden angesammelt haben. Wie sich im Versuch zeigt, lässt sich eine derartige Schüttung 3 leicht mit einem Rührer 5 aufwirbeln. Es ist ein Ausschnitt 43 der oberen Grenzfläche 30 der Schüttung 3 in Fig.5 vergrössert dargestellt. Einzelne Körperchen 2 sind bereits aufgeschwemmt. Dank der länglichen Form der Körperchen 2 bietet die Oberfläche 30 der Schüttung 3 viele Angriffsflächen, an denen die strömende Flüssigkeit 4 einwirken kann. Dank der kleinen spezifischen Dichte der Körperchen 2 (kleiner als 1,5 g/cm³) besteht ein geringer Widerstand gegen die Einwirkung der Strömung, so dass sich die Körperchen 2 leicht ablösen und in Suspension bringen lassen.

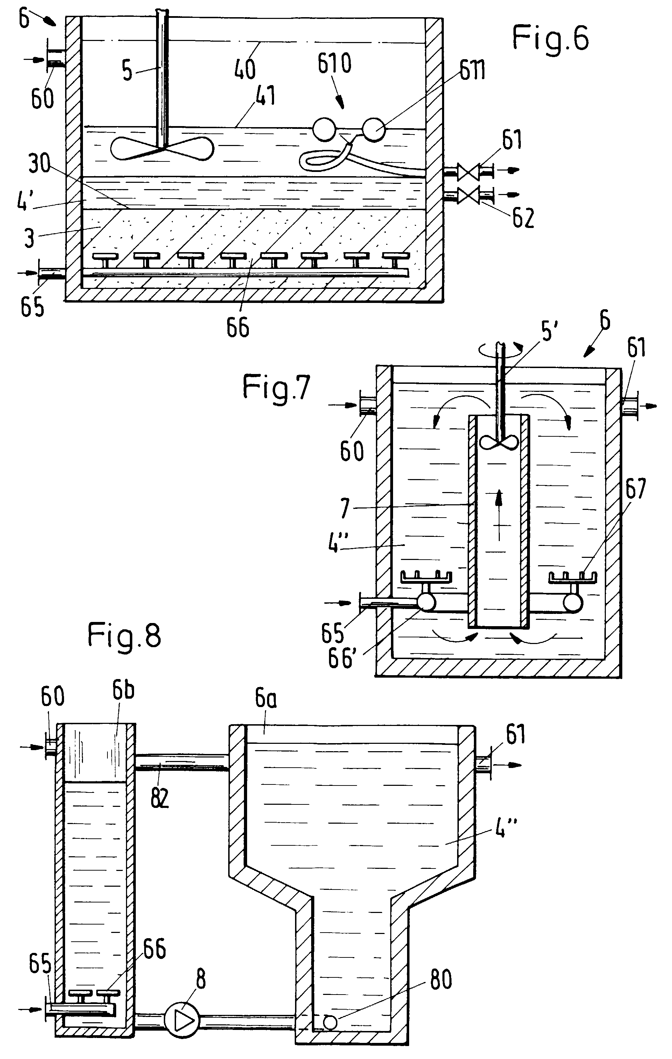

Anhand der Fig.6 wird eine erste vorteilhafte Verwendung des erfindungsgemässen Trägermaterials 1 erläutert: Es handelt sich um ein Verfahren, bei der eine Nitrifikation sowie eine Denitrifikation durchgeführt werden und zwar in einem chargenweise betriebenen Biofilmreaktor 6, einem sogenannten SBBR (= "Sequencing Batch Biofilm Reactor", vgl. J. Döllerer, P.A. Wilderer "Reinigung von Brüdenkondensaten aus der Klärschlammtrocknung durch Einsatz des SBBR-Verfahrens", Abwasserreinigung, 1995, S. 69; bei diesem Verfahren wird ein Festbett mit einer geschütteten Blähton-Packung verwendet).

Bei dem Verfahren mit dem Biofilmreaktor 6 wird dieser periodisch teilweise entleert, wobei die Trägerkörperchen 2 im Reaktor 6 bleiben. Um bei der Entleerung ein Mitreissen von Trägermaterial und Belebtschlamm zu verhindern, wird eine an Schwimmkörpern 611 fixierte Abzugsvorrichtung 610 verwendet, die eine oberflächennahe Entleerung erlaubt. Nach der Entleerung von behandeltem Abwasser (über den Stutzen 61) und gegebenenfalls von Überschussschlamm 4' (über den Stutzen 62) wird erneut zu behandelndes Abwasser, das Ammonium enthält, in den Reaktor 6 (über den Stutzen 60) eingespeist. Diese Abwasserzufuhr und anschliessende Behandlung kann in mehreren Phasen erfolgen.

Die erste Behandlungsphase kann in Abhängigkeit von dem Abwasser wahlweise mit der Denitrifikation (nämlich Kohlenstoffoxidation unter Nutzung von in NO₂ und NO₃ gebundenem Sauerstoff) oder Nitrifikation (Oxidation von Ammonium NH₄ und organischem Stickstoff zu NO₂ und NO₃) beginnen. Sie wird alternierend in einem oder mehreren Schritten bis zum angestrebten Reinigungsziel der Stickstoffelimination fortgesetzt. Während der Nitrifikationsphase wird belüftet. Die Zufuhr von Prozessluft erfolgt über die Leitung 65 und den Belüftungselementen 66. Die Belüftung bewirkt zusätzlich eine Durchwirbelung des Reaktorinhalts, aufgrund der die Trägerkörperchen in Suspension bleiben.

Nach erfolgter Nitrifikation wird die Luftzufuhr unterbrochen, so dass sich anoxische Bedingungen ausbilden. Mit einem Rührer 5 wird für die Aufrechterhaltung des Suspensions-Zustands gesorgt. Unter den anoxischen Bedingungen erfolgt die Nutzung des in Nitratform gebundenen Sauerstoffs durch die weitere biologische Behandlung, nämlich durch die Denitrifikation, die einen zweiten Abschnitt der Behandlungsphase bildet. In einer zweiten und in weiter folgenden Phasen wechseln in dieser Weise Nitrifikation und Denitrifikation ab, wobei je nach Abwasserqualität die Einspeisung in jeder Denitrifikationsphase (relativ hohe Konzentrationen von NO₂ und NO₃) oder jeder Nitrifikationsphase (relativ hohe Konzentrationen von Ammonium und organischem Stickstoff) beginnt.

Ist der Reaktor 6 bis zum Niveau 40 aufgefüllt und die letzte Behandlungsphase abgeschlossen, so stellt man jede Rührbewegung ein und lässt die Trägerkörperchen sich absetzen. Dabei sinken die schwereren Körperchen 2 schneller ab als der Überschussschlamm, der aus Biofilmteilchen besteht, die sich während der Abwasserbehandlung unter Rühreinwirkungen von den Körperchen 2 abgelöst haben. Ein Teil des Überschussschlamms bildet schliesslich eine separate Schicht 4', die eine Schüttung 3 der Körperchen 2 überlagert. Oberhalb der Schicht 4' befindet sich feststoffarmes, behandeltes Abwasser. Das Wasser, das sich zwischen den Niveaus 40 und 41 befindet, wird über den Stutzen 61 abgelassen. Über den tiefer angeordneten Stutzen 62 kann Überschussschlamm entnommen werden.

Die Figuren 7, 8 und 9 betreffen kontinuierliche Verfahren, bei denen die Trägerkörperchen 2 ständig in einer Suspension gehalten werden. In dem Schlaufenreaktor 6 der Fig.7 wird die Suspension 4'' durch eine zentrales Rohr 7 und mittels eines Förderpropellers 5' aus dem Bodenbereich in die obere Region des Reaktors 6 gepumpt. Mit einer Belüftungseinrichtung (Einspeiseleitung 65, Verteilerrohr 66' und Düsen 67) werden Gasblasen eingetragen, die in der nach unten strömenden Suspension 4'' eine Durchwirbelung bewirken. Falls eine Nitrifikation durchgeführt wird, so wird für die Belüftung ein sauerstoffhaltiges Gas, beispielsweise frische Umgebungsluft, verwendet. Die Belüftung kann im Gleichstrom über das Zentralrohr oder die äussere Ringfläche mit oder ohne Rührwerksunterstützung erfolgen, im Gegenstrom durch Ändern der Rührwerksrichtung. Die Denitrifikation wird nur durch Umwälzung mittels Rührwerk durchgeführt. Das zu behandelnde Wasser wird über den Stutzen 60 zugeführt und das behandelte Wasser über den Stutzen 61 abgeführt. Biomasse, die aus dem Reaktor 6 mitverfrachtet wird, kann anschliessend abgeschieden und wieder zurückgeführt werden. Gleichzeitig kann Überschussschlamm abgeschieden und aus dem Verfahren entfernt werden.

Fig.8 zeigt einen für die Nitrifikation vorgesehenen Wirbelbett- oder Schwebebettreaktor 6a. In einem separaten Gefäss 6b, das über eine Pumpe 8 und einen Rücklauf 82 mit dem Reaktor 6a verbunden ist, wird die Suspension 4'' mit Sauerstoff über den Eintrag von Luft oder technischem Sauerstoff angereichert (Luftzufuhr 65, Belüftungselemente 66). Es können Massnahmen getroffen werden (in der Zeichnung nicht gezeigt), die einen Transport von Biomaterial 2 in das Gefäss 6b verhindern. Die sauerstoffreiche Flüssigkeit, die mit der Pumpe 8 über ein Verteilsystem 80 (z.B. tangentiale Anströmung) in den Wirbelbettreaktor 6a eingespeist wird, sorgt für die nötige Aufwirbelung des Biomaterials 2. Bezüglich dem durch den Stutzen 61 entnommenen Wasser, das Biomaterial mitführt, gilt entsprechendes wie schon beim Schlaufenreaktor 6 der Fig.7.

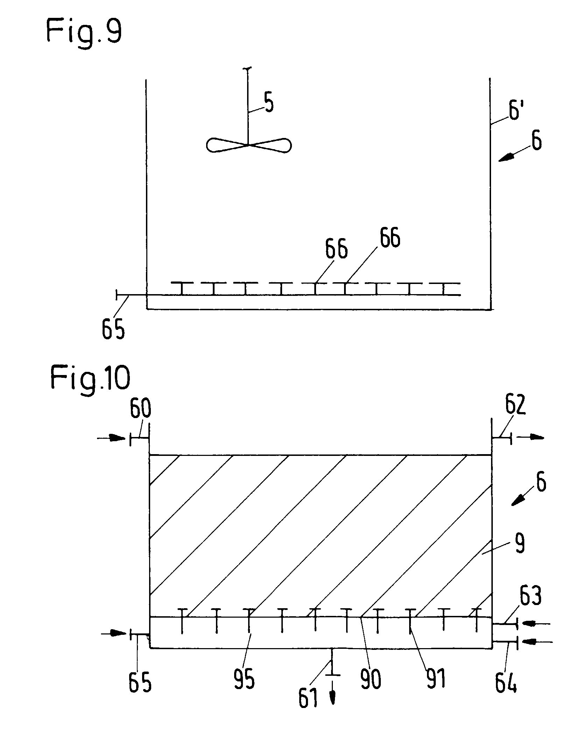

Fig. 9 zeigt stark schematisiert einen durchmischten Reaktor 6 ohne Inhalt. Ausser der Gefässwand 6' sind ein Rührwerk 5 und eine Belüftungseinrichtung 65, 66 (vgl. Fig.6) dargestellt.

Das erfindungsgemässe Trägermaterial lässt sich auch für das Festbett 9 eines Festbettreaktors 6 - siehe Fig.10-verwenden. Das Festbett 9 wird durch einen Zwischenboden 90 mit Bodendüsen 91 von einem Polsterraum 95 getrennt. Über Stutzen 63 und 64 lässt sich Spülwasser bzw. Spülluft in den Polsterraum zuführen. Weitere Komponenten des Festbettreaktors 6 sind: Zulauf 60 für das zu behandelnde Wasser, Auslauf 61 für das behandelte Wasser, Auslauf 62 für Schlammwasser und Einspeisestelle 65 für Luft oder technischen Sauerstoff.

Werden gebrauchte Autoreifen als Ausgangsstoff für die Herstellung des erfindungsgemässen Trägermaterials verwendet, so achtet man mit Vorteil darauf, dass der Gummi faserfrei ist. In diesem Fall ist der Ausgangsstoff homogen, so dass sich Trägerkörperchen ergeben, die alle die gleiche Dichte aufweisen. Damit die Körperchen mit Wasser benetzbar sind, müssen deren Oberflächen mit einem Tensid behandelt werden. Damit ein Bewuchs mit Bakterien einsetzt, muss das frische Trägermaterial zunächst einige Tage mit Wasser in Kontakt stehen, so dass Stoffe, die den Bewuchs hemmen oder verhindern, ausgelaugt werden können.

## Patentansprüche

1. Trägermaterial für Biomasse bei Verfahren zum Reinigen von Abwasser, eine Vielzahl von Körperchen (1) umfassend, die mehrheitlich länglich ausgebildet sind, rauhe Oberflächen (10) aufweisen und durch Zerkleinern aus einem Ausgangsstoff hergestellt sind, der weitgehend homogen sowie porenfrei ist und dessen Dichte im Bereich zwischen 1,05 und 1,5 g/cm³ liegt, wobei einer Mehrheit der Körperchen, die mindestens rund 80 Gewichtsprozent derer Gesamtmenge umfasst, folgende statistischen Angaben bezüglich Längen (L) und Breiten (B1, B2) der Körperchen zuordenbar sind: Längen mit Werten von rund 0,5 bis 20 mm und Breiten mit Werten von rund 0,2 bis 3 mm, sowie ein Mittelwert des Verhältnisses von Länge zu grösserer Breite (B1) grösser als 2.

2. Trägermaterial nach Anspruch 1, dadurch gekennzeichnet, dass die Dichte des Ausgangsstoffs rund 1,2 g/cm³ beträgt.

3. Trägermaterial nach Anspruch 1 oder 2, dadurch gekennzeichnet, dass der Ausgangsstoff ein weitgehend faserfreier Gummi von gebrauchten Autoreifen ist.

4. Trägermaterial nach einem der Ansprüche 1 bis 3, dadurch gekennzeichnet, dass das Grössenspektrum der genannten Mehrheit der Körperchen (1) durch folgende Masse charakterisierbar ist: Länge (L) der Körperchen rund 1 bis 5 mm, grössere Breite (B1) rund 0,5 bis 2 mm und kleinere Breite (B2) rund 0,2 bis 2 mm.

5. Trägermaterial nach einem der Ansprüche 1 bis 4, dadurch gekennzeichnet, dass die Körperchen (1) mit einem Tensid behandelt sind, das die Benetzbarkeit der Körperchenoberflächen (10) mit Wasser herstellt.

6. Verwendung eines Trägermaterials gemäss einem der Ansprüche 1 bis 5, dadurch gekennzeichnet, dass das Material als Träger von sessilen, langsam wachsenden Bakterien dient, die insbesondere eine Nitrifikation oder eine Denitrifikation ausführen können.

7. Verwendung eines Trägermaterials nach Anspruch 6, dadurch gekennzeichnet, dass die Bakterien in einem Schlaufenreaktor eingesetzt werden.

8. Verwendung eines Trägermaterials nach Anspruch 6, dadurch gekennzeichnet, dass die Bakterien in einem Wirbelbett-/Schwebebettreaktor eingesetzt werden.

9. Verwendung eines Trägermaterials nach Anspruch 6, dadurch gekennzeichnet, dass die Bakterien in einem Reaktor des SBR-Typs eingesetzt werden.

10. Verwendung eines Trägermaterials nach Anspruch 6, dadurch gekennzeichnet, dass die Bakterien in einem Festbettreaktor oder in einem durchmischten Reaktor eingesetzt werden.

## Claims

1. Carrier material for biomass in processes for the purification of waste water comprising a plurality of particles (1) the majority of which are elongate, have rough surfaces (10) and are produced by the fragmentation of a starting material which is largely homogeneous and pore-free and whose density lies in the region between 1.05 and 1.5 g/cm³, with the following statistical specifications concerning length (L) and widths (B1, B2) of the particles being attributable to a majority of the particles comprising at least about 80 percent by weight of their total amount: lengths having values of about 0.5 to 20 mm and widths having values of about 0.2 to 3 mm as well as an average value of the ratio of the length to the greater width (B1) being greater than 2.

2. Carrier material in accordance with claim 1 characterised in that the density of the initial substance amounts to about 1.2 g/cm³.

3. Carrier material in accordance with claim 1 or 2 characterised in that the initial substance is a largely fibre-free rubber from used automobile tires.

4. Carrier material in accordance with one of the claims 1 to 3 characterised in that the size spectrum of the said majority of the particles (1) can be characterised by the following dimensions: length (L) of the particles about 1 to 5 mm, greater width (B1) about 0.5 to 2 mm and lesser width (B2) about 0.2 to 2 mm.

5. Carrier material in accordance with one of the claims 1 to 4 characterised in that the particles (1) have been treated with a tenside which establishes the wettability of the surfaces (10) of the particles by water.

6. Use of a carrier material in accordance with one of the claims 1 to 5 characterised in that the material serves as a carrier of sessile, slowly growing bacteria which are capable in particular of carrying out a nitrification or a denitrification.

7. Use of a carrier material in accordance with claim 6 characterised in that the bacteria are used in a loop-type reactor.

8. Use of a carrier material in accordance with claim 6 characterised in that the bacteria are used in a fluidised bed or fluid bed reactor.

9. Use of a carrier material in accordance with claim 6 characterised in that the bacteria are used in a reactor of the SBBR type.

10. Use of a carrier material in accordance with claim 6 characterised in that the bacteria are used in a fixed bed reactor or a blender reactor.

## Revendications

1. Matériau de support d'une biomasse dans des procédés d'épuration des eaux d'égout, comprenant une pluralité de petits corps (1) qui, en majorité, sont réalisés d'une manière oblongue, présentent des surfaces rugueuses (10) et sont réalisés par fractionnement à partir d'un produit de départ, qui est homogène dans une grande mesure ainsi qu'exempt de pores et dont la densité se situe dans l'intervalle entre 1,05 et 1,5 g/cm³, où peuvent être associées à une majorité des petits corps qui comprend au moins environ 80 pour-cent en poids de la quantité totale de ceux-ci, les indications statistiques suivantes concernant les longueurs (L) et largeurs (B1, B2) des petits corps : des longueurs ayant des valeurs d'environ 0,5 à 20 mm et des largeurs ayant des valeurs d'environ 0,2 à 3 mm, ainsi qu'une valeur moyenne du rapport de la longueur à la largeur plus grande (B1) supérieure à 2.

2. Matériau de support selon la revendication 1, caractérisé en ce que la densité du produit de départ est d'environ 1,2 g/cm³.

3. Matériau de support selon la revendication 1 ou 2, caractérisé en ce que le produit de départ est un caoutchouc sensiblement exempt de fibres de bandages pneumatiques usés.

4. Matériau de support selon l'une des revendications 1 à 3, caractérisé en ce que le spectre de grandeur de la majorité indiquée des petits corps (1) peut être caractérisé par la masse suivante : longueur (L) des petits corps d'environ 1 à 5 mm, largeur plus grande (B1) d'environ 0,5 à 2 mm et largeur plus petite (B2) d'environ 0,2 à 2 mm.

5. Matériau de support selon l'une des revendications 1 à 4, caractérisé en ce que les petits corps (1) sont traités avec un agent de surface qui réalise la mouillabilité des surfaces (10) des petits corps avec de l'eau.

6. Utilisation d'un matériau de support selon l'une des revendications 1 à 5, caractérisée en ce que le matériau sert de support à des bactéries sessiles, croissant lentement qui peuvent exécuter notamment une nitrification ou une dénitrification.

7. Utilisation d'un matériau de support selon la revendication 6, caractérisée en ce que les bactéries sont utilisées dans une colonne à bulles à écoulement en boucles.

8. Utilisation d'un matériau de support selon la revendication 6, caractérisée en ce que les bactéries sont utilisées dans un réacteur à lit fluidisé/à lit flottant.

9. Utilisation d'un matériau de support selon la revendication 6, caractérisée en ce que les bactéries sont utilisées dans un réacteur du type SBBR (réacteur de biofilm à lots séquentiels).

10. Utilisation d'un matériau de support selon la revendication 6, caractérisée en ce que les bactéries sont utilisées dans un réacteur à lit solide ou dans un réacteur de mélange.
